# FASCICULE DE BREVET EUROPEEN

(11) **EP 2 117 764 B1**
(45) Date de publication et mention de la délivrance du brevet: **01.06.2011**
(21) Numéro de dépôt: 08716761.5
(22) Date de dépôt: 06.02.2008
(51) Int. Cl.: B23K 26/38, B23K 26/08, B23K 26/06

(54) **PROCEDE DE DECOUPAGE DE PIECES A USINER A L'AIDE D'UN LASER PULSE**
VERFAHREN ZUM SCHNEIDEN VON ZU VERARBEITENDEN TEILEN MITTELS EINES GEPULSTEN LASERS
METHOD FOR CUTTING PARTS TO BE MACHINED USING A PULSED LASER

(30) Priorité: 13.02.2007 EP 07102270
(43) Date de publication de la demande: 18.11.2009
(73) Titulaire: LASAG AG, CH-3602 Thun (CH)
(72) Inventeur: DÜRR, Ulrich, CH-3608 Allmendingen (CH)
(74) Mandataire: Mörtel, Alfred
(86) Numéro de dépôt international: PCT/EP2008/051463
(87) Numéro de publication internationale: WO 2008/101808

(56) Documents cités:
- EP-A1- 0 618 037
- WO-A-00/52231
- WO-A-03/056372
- US-A- 5 662 822
- US-A1- 2002 056 345
- US-A1- 2005 272 610
- US-B1- 6 391 526

## Description

La présente invention concerne un procédé de découpage selon le préambule de la revendication 1. US 5 662 822 A décrit un tel procédé.

Une application particulière concernée par la présente invention est le sectionnement de tuyaux présentant un diamètre de quelques millimètres. De manière générale, l'invention concerne le découpage de pièces où la longueur de la ligne de découpage est située entre quelques millimètres et quelques dizaines de millimètres.

L'utilisation de laser fournissant un faisceau en continu (CW-lasers) pour effectuer des découpages propres et nets est de fait limité car la puissance de tels lasers est limitée et l'augmentation de puissance (par exemple entre 10 et 20 KW) coûte très cher. On ne peut donc découper pratiquement que de fines feuilles.

L'utilisation de lasers pulsés pour le découpage de pièces à usiner, en particulier métallique ou céramique, est aussi connue de l'homme du métier. Les lasers pulsés permettent d'obtenir aisément des impulsions de haute puissance. Pour effectuer un découpage de quelques millimètres de long dans une pièce à usiner, en particulier pour former une ouverture dans une telle pièce, le découpage avec un laser pulsé est obtenu par une succession de trous plus ou moins oblongs et partiellement superposés de manière à effectuer le découpage prévu. Cette méthode usuelle ne permet pas d'obtenir des découpages parfaitement propres et présentant notamment un contour sans aspérité ou légère ondulation. En effet, la succession des trous formés par des impulsions laser successives permet difficilement d'obtenir un découpage par exemple parfaitement rectiligne ou circulaire étant donné que l'énergie apportée par le faisceau laser n'est pas constante le long de la ligne de découpage. La quantité d'énergie variant le long de la ligne de découpe, la faute résultante présente une largeur qui varie en fonction de cette énergie. La paroi engendrée par le découpage laser présente donc une certaine ondulation ou rugosité. On remarquera que plus la vitesse de découpage est élevée, moins le contour du découpage est net et uniforme. Comme la fréquence des impulsions laser est limitée, la vitesse de découpage est aussi limitée pour conserver une certaine qualité.

Le but de la présente invention est de résoudre le problème lié aux inconvénients mentionnés ci-dessus en fournissant un procédé de découpage à l'aide d'un faisceau laser pulsé permettant d'effectuer des découpages très propres et notamment des ouvertures avec une paroi sensiblement lisse.

L'utilisation de laser pulsé permet d'obtenir des puissances moyennes pour chaque impulsion relativement élevée par rapport à la puissance moyenne du laser.

Une puissance relativement élevée est nécessaire pour effectuer proprement des découpages notamment dans une pièce métallique ou en céramique présentant une certaine épaisseur, par exemple de quelques dixièmes de millimètre.

La présente invention concerne donc un procédé de découpage dans une pièce à l'aide d'un laser pulsé fournissant un faisceau formé d'impulsions laser selon la revendication 1, ce procédé étant caractérisé en ce qu'un découpage complet dans ladite pièce est effectué entièrement par une seule desdites impulsions laser et par un rapide mouvement relatif entre ladite pièce et ledit faisceau laser, la durée de ladite impulsion étant prévue suffisamment longue en fonction dudit mouvement relatif pour que ledit faisceau laser parcourt au moins la longueur prévue dudit découpage.

De manière à pouvoir effectuer un découpage d' une certaine longueur à l'aide d'une seule impulsion laser, il est prévu selon l'invention d'engendrer des impulsions laser relativement longues ayant une durée supérieure à une milliseconde et de préférence de l'ordre de grandeur de 10 ms (millisecondes) ou supérieure, notamment entre 10 et 100 ms. De préférence, on sélectionne une installation permettant un déplacement relatif à haute vitesse, notamment de l'ordre de grandeur de 10 m/min (mètres par minute) ou supérieur. La mise en oeuvre du procédé selon l'invention permet ainsi d'obtenir un découpage complet selon une ligne ou un contour mesurant jusqu'à quelques dizaines de millimètres à chaque impulsion laser. Bien évidemment, la présente invention n'est pas limitée aux découpages de longueur relativement importante, mais s'applique également avantageusement pour des découpages de moindres longueurs, notamment de l'ordre de grandeur du millimètre.

Dans un mode de mise en oeuvre préféré du procédé d'usinage laser selon l'invention, il est prévu de moduler le profil de puissance des impulsions laser engendrées par l'installation laser pour optimiser le découpage et obtenir une ligne de découpe d'épaisseur sensiblement constante. En particulier, il est prévu un pic de puissance initial permettant d'effectuer le perçage initial dans la pièce à usiner lorsque cet usinage ne commence pas le long d'un bord de cette pièce. Ensuite, dans une variante, le corps de l'impulsion suivant le pic initial est également modulé pour obtenir un apport d'énergie constant le long de la ligne ou du contour de découpage, notamment en fonction des diverses courbures prévues.

Le procédé selon l'invention permet en particulier d'effectuer une série d'ouvertures en continu, c'est-à-dire en laissant défiler la pièce à usiner à une vitesse donnée en fonction de la fréquence des impulsions laser, lesquelles présentent une longueur déterminée pour effectuer chacune une ouverture prévue.

La présente invention sera décrite ci-après de manière plus détaillée en référence au dessin annexé dans lequel:
- la figure 1 représente schématiquement une première installation d'usinage laser pour la mise en oeuvre du procédé selon l'invention dans une application de découpage d'ouvertures dans une pièce;
- la figure 2 représente schématiquement une deuxième installation d'usinage laser pour la mise en oeuvre du procédé selon l'invention;
- la figure 3 représentent schématiquement une buse avec une grande ouverture de forme particulière et adaptée à un découpage prévu avec la deuxième installation;
- la figure 4 représente schématiquement une tête d'usinage particulière formant une variante de la deuxième installation;
- les figures 5A et 5B représentent deux variantes du profil de puissance des impulsions laser selon l'invention;
- la figure 6 représente schématiquement une installation d'usinage laser pour sectionner un tuyau selon le procédé de l'invention.

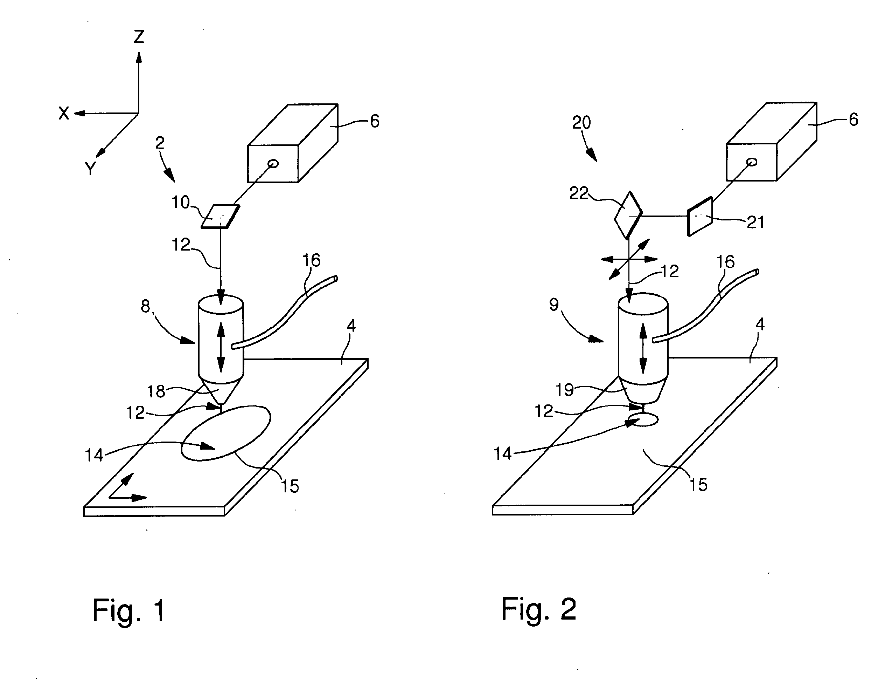

A la figure 1 est représentée une installation laser 2 pour la mise en oeuvre du procédé selon la présente invention. L'installation laser est représentée de manière tout à fait schématique avec une source laser 6, un miroir 10 servant à dévier le faisceau laser fourni par la source 6 en direction de la tête d'usinage 8 qui comporte en particulier des moyens optiques de focalisation du faisceau laser. L'installation 2 est prévue pour effectuer des découpages dans des plaques ou pièces à usiner 4. Dans l'exemple donné ici, le faisceau laser 12 sortant de la tête d'usinage 8 est utilisé pour effectuer des ouvertures 14 dans la pièce 4. La tête 8 est mobile seulement selon l'axe vertical, alors que la pièce 4 subit un mouvement horizontal par rapport à cette tête. La pièce 4 est donc agencée dans une installation d'usinage à commande numérique qui engendre un déplacement horizontal contrôlé de la pièce 4. On notera que le découpage de pièces dans une plaque peut être réalisé de la même manière avec un contour quelconque des pièces.

Dans le cadre de la présente invention, le laser sélectionné 6 est du type pulsé, c'est-à-dire engendrant une succession d'impulsions laser.

Selon l'invention, le découpage de chaque ouvertures 14 ou de chaque pièce découpée est effectué par une seule impulsion laser fournie par la source laser 6. Ainsi, contrairement au procédé de l'art antérieur, le découpage le long du contour 15 définissant le bord de l'ouverture 14 est effectué dans la durée d'une seule impulsion, et non par une succession d'impulsions engendrant une succession de trous plus ou moins oblongs. Comme déjà mentionné, cette technique permet d'obtenir des découpages propres et précis avec une fente de découpage de largeur constante. Ainsi, la paroi résultante de l'ouverture 14 est lisse et l'arrête définissant le bord de l'ouverture 14 ne présente pas de saillies ou d'ondulations.

Pour réaliser un découpage dans la durée d'une seule impulsion laser, il est prévu d'une part d'engendrer des impulsions avec une durée d'impulsion relativement longue, supérieure à une milliseconde. Pour certaines applications, cette durée est de préférence supérieure à 10 millisecondes et peut aller jusqu'à 200 millisecondes. Cette dernière valeur ne définit pas une valeur maximale limitant la portée de la présente invention. On notera que pour plusieurs applications dans lesquelles le procédé selon l'invention est particulièrement efficace et innovant, la durée des impulsions laser est située environ entre 10 à 100 ms. Pour de petites longueurs de découpage, des durées d'impulsions inférieures peuvent évidemment être utilisées. Toutefois dans le cadre de la présente invention, la durée des impulsions est prévue supérieure à 1 ms pour permettre au faisceau laser d'effectuer le découpage complet d'une partie d'une pièce dans la durée de chaque impulsion.

De préférence, on utilisera une installation à commande numérique capable d'effectuer des mouvements rapides et également des accélérations élevées dans la phase initiale. La combinaison d'un rapide mouvement relatif avec une durée d'impulsion laser de longue durée permet d'effectuer un découpage d'une longueur relativement élevée, par exemple entre 10 et 50 millimètres, à chaque impulsion.

A titre d'exemple, la vitesse relative entre la pièce à usiner 4 et la tête laser 8 est comprise entre 10 et 50 mètres par minute (m/min). On remarquera que les divers paramètres en présence, en particulier la durée d'impulsion laser, la vitesse du mouvement relatif et la longueur du découpage prévues sont dépendants l'un des autres. L'homme du métier saura ajuster ces paramètres à chaque application prévue pour mettre efficacement en oeuvre le procédé de découpage laser selon l'invention.

Dans une variante préférée, du procédé de l'invention, il est prévu de fournir un gaz sous haute pression notamment de l'oxygène. L'amenée du gaz sous pression est représentée schématiquement par le tube 16 par lequel un gaz sous pression est apporté dans la tête d'usinage 8 et ressort sous forme de jet par l'ouverture de la buse terminale 18 de la tête 8 par laquelle sort également le faisceau lasser 12.

Evidemment, l'homme du métier peut combiner dans une même installation un déplacement de la tête d'usinage et également un mouvement de la pièce usinée 4. Ces deux mouvements sont contrôlés de manière à obtenir un mouvement relatif permettant d'effectuer un découpage donné à l'aide d'une seule impulsion fournie par la source 6. On remarquera que la pièce usinée peut avoir une surface quelconque autre qu'une surface plane comme représentée aux figures 1 et 2. La surface dans laquelle un découpage est effectué peut par exemple être cylindrique. Dans un tel cas soit la pièce 4, soit la tête d'usinage 8 ou les deux subissent un mouvement vertical. Evidemment le mouvement selon l'axe vertical est synchronisé par rapport aux mouvements dans le plan horizontal.

La figure 2 montre un autre mode de réalisation d'une installation laser 20 pour la mise en oeuvre du procédé selon l'invention. Les références déjà décrites ci-avant ne seront pas exposées ici en détail. L'installation 20 comprend un dispositif optique du type scanner, schématisé par deux miroirs 21 et 22 orientables pour varier la position horizontale du faisceau laser 12 fourni par la source 6, de manière qu'il décrive ou suive sur la pièce 4 un tracé selon un contour de découpage prédéterminé, à la figure 2 un cercle 15, pour usiner l'ouverture 14.

La tête d'usinage 9 présente des dimensions suffisantes pour que l'ouverture dans la buse terminale 19 ait des dimensions correspondantes au contour 15 prévu. Plus précisément, la tête d'usinage a une buse présentant une ouverture de sortie dudit faisceau laser et d'un gaz de travail dont le contour extérieur correspond sensiblement au contour de découpage pour permettre au faisceau laser de sortir de cette buse en suivant ledit tracé selon ce contour découpage.

Pour des découpages circulaires, on peut utiliser une optique tournante qui rend le faisceau légèrement oblique et le fait tourner rapidement. Tous les autres éléments restent fixes, ce qui permet d'effectuer l'usinage circulaire à très haute vitesse. Ainsi, dans le présent cas, la pièce usinée 4 peut demeurer dans une position fixe et seul le dispositif optique (21, 22) est mobile pour que le faisceau laser suive entièrement lors de chaque impulsion laser une ligne de découpage prévue. Ceci permet d'obtenir aisément des vitesses de découpage élevées.

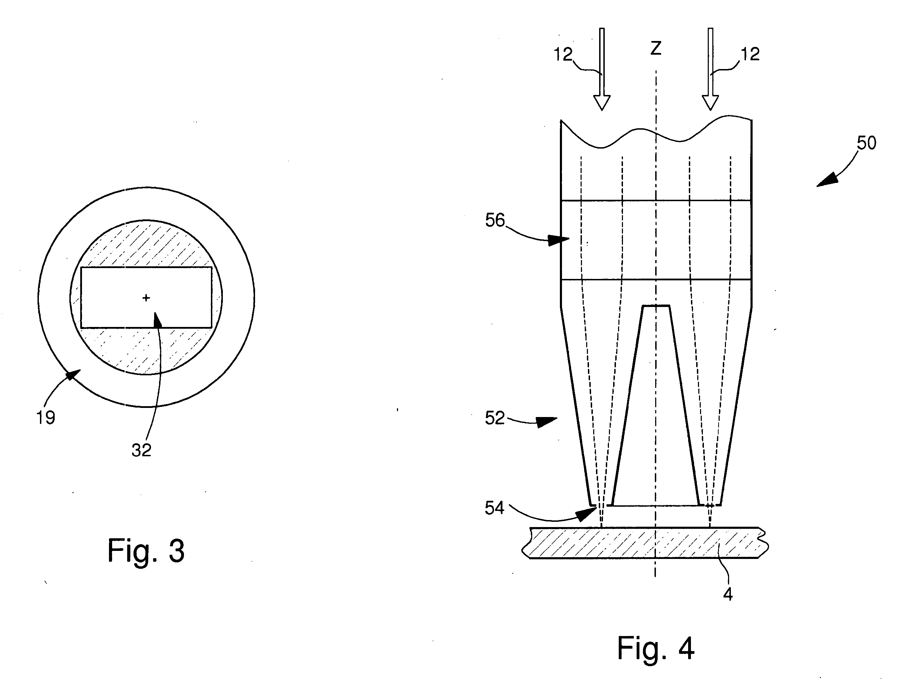

A la figure 3 est représentée une variante de buse 19 prévue dans l'installation de la figure 2 (du type scanner) pour des découpages rectangulaires. On souhaite donc que le faisceau laser 12 subisse lors de chaque impulsion un mouvement selon un contour rectangulaire dans le plan horizontal sans nécessiter de déplacer de manière synchrone la tête d'usinage elle-même. A cet effet, il est prévu dans la buse terminale une ouverture 32 dont la forme correspond au contour prévu pour le découpage dans les pièces à usiner. On peut simplement prévoir une fente dans le cas d'un balayage rectiligne ou selon une ligne quelconque.

Lorsque le contour 15 présente un relativement grand diamètre, une tête d'usinage avec une buse 19 présentant une ouverture comme à la figure 3 pose un problème pour l'apport d'un gaz de travail avec une pression suffisante. Dans un tel cas, il est proposé dans le cadre de la présente invention de réaliser une tête d'usinage 50 avec une buse terminale 52 ayant une fente circulaire 54, comme représenté schématiquement à la figure 4. La buse 52 présente ici une symétrie axiale selon l'axe Z. On notera que la fente de sortie du faisceau laser et du gaz de travail peut définir un contour quelconque correspondant au contour de découpage déterminé. La surface de la fente est relativement petite de sorte que la pression du gaz de travail peut rester suffisante dans le jet de gaz localisé au contour de découpage. On utilisera de préférence une lentille de focalisation 56 du type F-Theta qui focalise dans un même plan perpendiculaire à son axe optique.

Pour la mise en oeuvre du procédé selon l'invention, à titre d'alternative, l'homme du métier peut également utiliser une installation laser dans laquelle la tête d'usinage est reliée à la source laser par une fibre optique.

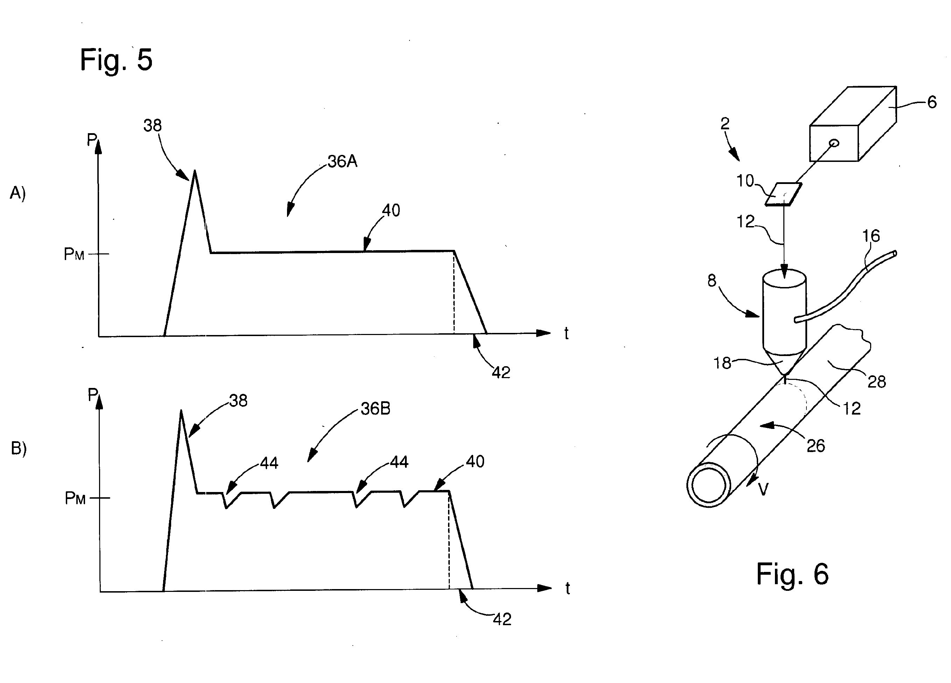

Selon un mode de mise en oeuvre préféré de l'invention, chaque impulsion laser présente un pic de puissance initial 38 pour effectuer un perçage initial dans la pièce à usiner. Un tel pic de puissance est approprié dans le cas où le découpage ne commence pas depuis un bord de la pièce. Deux variantes de profil de puissance des impulsions laser selon l'invention sont représentées schématiquement aux figures 5A et 5B. L'impulsion laser 36A comprend un pic de puissance initial 38 suivi d'un corps d'impulsion 40 avec une puissance bien inférieure à la puissance maximale du pic 38. La puissance du corps d'impulsion 40 correspond sensiblement à la puissance moyenne P_{M} de l'impulsion 36A. On notera que le corps d'impulsion 40 présente une puissance constante jusqu'à sa partie terminale où il finit par un profil à pente raide mais non vertical. Cette partie terminale de l'impulsion correspond à la phase d'arrêt du mouvement relatif entre la tête d'usinage laser et la pièce usinée. Cette caractéristique particulière permet d'obtenir dans la phase d'arrêt un apport d'énergie par millimètre de découpage sensiblement égal à la quantité d'énergie par millimètre fourni à la vitesse relative nominale. L'impulsion 36A est particulièrement prévue pour un découpage circulaire ou elliptique.

Selon une variante du profil d'impulsion, le corps d'impulsion 40 peut présenter un profil variable également avant la phase d'arrêt en fonction de la ligne de découpage, notamment lorsque cette ligne présente des courbures de petit rayon où il est avantageux de réduire la puissance de l'impulsion pour limiter la quantité d'énergie apportée dans cette région. La figure 5B représente schématiquement une variante adaptée à l'usinage d'un contour rectangulaire. Dans ce cas, l'impulsion 36B présente un corps d'impulsion 40 avec des creux de puissance 44 correspondant aux passages par les quatre angles droits du rectangle. Ceci permet d'obtenir un apport d'énergie constant par unité de déplacement relatif également dans les angles où le changement de direction peut ralentir courtement la vitesse de déplacement relative entre le faisceau laser et la pièce usinée. La durée terminale 42 de la phase d'arrêt est prévue inférieure à celle de la figure 5A, ce qui correspond à une décélération supérieure du mouvement relatif dans la phase terminale du découpage.

A la figure 6 est représentée une autre application du procédé de découpage selon l'invention. L'installation laser 2 est similaire à celle représentée à la figure 1. Cette installation sert au découpage de tubes 28. Chaque sectionnement d'une partie 26 du tube 28 est effectué à l'aide d'une seule impulsion laser dont la durée est sélectionnée en fonction de la vitesse V de rotation à laquelle le tube 28 est entraîné et également du diamètre de ce tube. La vitesse de rotation V dépendra notamment du matériau formant la paroi du tube 28 ainsi que l'épaisseur de cette paroi à découper.

La puissance moyenne des impulsions est également un paramètre à considérer. A titre d'exemple, avec une puissance moyenne P_{M} = 400W pour chaque impulsion laser et une paroi en acier inox de 0.3 millimètre, il est possible d'effectuer un découpage à une vitesse pouvant atteindre 30 m/min. A titre d'exemple, dans ces conditions, une durée d'impulsion de 50 ms permet d'effectuer un découpage sur une longueur d'environ 25 millimètres. Ainsi, à l'aide d'une seule impulsion, un tube d'un diamètre d'environ 8 millimètres peut être découpé. On obtient un sectionnement très propre avec une paroi latérale plane.

Le procédé de découpage selon un mode de mise en oeuvre particulier est caractérisé en ce que la durée desdites impulsions laser est située sensiblement entre 10 et 100 millisecondes (ms) et la vitesse relative dudit mouvement relatif est située entre 10 et 50 mètres par minute (m/min) environ.

## Revendications

1. Procédé de découpage dans une pièce (4; 28) à l'aide d'un laser pulsé (6) fournissant un faisceau laser (12) formé d'impulsions laser (36A, 36B), **caractérisé en ce que** chaque découpage dans ladite pièce est effectué entièrement par une seule impulsion laser lors d'un mouvement relatif entre ladite pièce et ledit faisceau laser à une vitesse de 10 mètres par minute (m/min) ou supérieure, la durée de ladite impulsion étant supérieure à une milliseconde (1 ms) et prévue suffisamment longue en fonction dudit mouvement relatif pour que ledit faisceau laser parcourt au moins la longueur de ce découpage durant ladite seule impulsion laser.

2. Procédé de découpage selon la revendication 1, **caractérisé en ce qu'**il est mis en oeuvre à l'aide d'un dispositif optique du type scanner ou d'une optique tournante permettant de faire subir au faisceau laser lors de chaque impulsion un mouvement rapide de manière qu'il suive sur ladite pièce un tracé selon une ligne ou un contour de découpage prédéterminés.

3. Procédé de découpage selon la revendication 2, **caractérisé en ce qu'**il est mis en oeuvre à l'aide d'une tête d'usinage (9 ; 50) ne subissant aucun déplacement horizontal, ladite tête d'usinage ayant une buse (19 ; 52) présentant une ouverture de sortie dudit faisceau laser et d'un gaz de travail dont le contour extérieur correspond sensiblement audit contour de découpage pour permettre au faisceau laser de sortir de cette buse en suivant ledit tracé selon ce contour de découpage.

4. Procédé de découpage selon la revendication 3, **caractérisé en ce que** ladite tête d'usinage (50) comprend une buse (52) présentant une fente (54) qui définit un contour correspondant au contour de découpage prévu.

5. Procédé de découpage selon la revendication 1, **caractérisé en ce que** ladite pièce est un tube (28) et **en ce que** le découpage prévu par une seule et même impulsion laser consiste en un sectionnement d'une partie (26) dudit tube.

6. Procédé de découpage selon l'une des revendications précédentes, dans lequel un perçage initial est nécessaire pour effectuer ce découpage, **caractérisé en ce que** ladite impulsion laser prévue (36A, 36B) comporte un pic de puissance initial (38) pour effectuer ledit perçage initial dans ladite pièce (4, 28).

7. Procédé de découpage selon la revendication 6, **caractérisé en ce que** ledit pic de puissance initial (38) est suivi d'un corps d'impulsion (40) présentant un profil de puissance qui varie en fonction de la vitesse relative dudit mouvement relatif.

8. Procédé de découpage selon la revendication 7, **caractérisé en ce que** ledit profil de puissance comprend une partie terminale avec une pente négative dont la valeur est déterminée en fonction de la décélération dans la phase d'arrêt du mouvement relatif. ,

9. Procédé de découpage selon la revendication 7 ou 8, **caractérisé en ce que** ledit profil de puissance est déterminé de manière à fournir un apport d'énergie constant par unité de déplacement relatif, pour que cet apport soit uniforme le long de la ligne ou du contour de découpage.

10. Procédé de découpage selon l'une des revendications précédentes, **caractérisé en ce que** la durée desdites impulsions laser est située sensiblement entre 10 et 100 millisecondes (ms)

## Claims

1. Method for cutting into a part (4; 28) with the aid of a pulsed laser (6) supplying a laser beam (12) formed of laser pulses (36A, 36B), **characterized in that** each cut into the said part is made entirely by a single laser pulse during a relative movement between the said part and the said laser beam at a speed of 10 metres per minute (m/min) or higher, the duration of the said pulse being longer than 1 millisecond (1 ms) and provided to be sufficiently long depending on the said relative movement so that the said laser beam travels over at least the length of this cut during the said single laser pulse.

2. Cutting method according to Claim 1, **characterized in that** it is applied with the aid of an optical device of the scanner type or with the aid of a rotating lens making it possible to make the laser beam, during each pulse, undergo a rapid movement so that it follows on the said part a trace along a predetermined cutting line or contour.

3. Cutting method according to Claim 2, **characterized in that** it is applied with the aid of a machining head (9; 50) undergoing no horizontal movement, the said machining head having a nozzle (19; 52) having an opening for the outlet of the said laser beam and of a working gas, the external contour of which substantially matches the said cutting contour in order to allow the laser beam to come out of this nozzle following the said trace of this cutting contour.

4. Cutting method according to Claim 3, **characterized in that** the said machining head (50) comprises a nozzle (52) having a slot (54) which defines a contour matching the planned cutting contour.

5. Cutting method according to Claim 1, **characterized in that** the said part is a tube (28) and **in that** the planned cutting by one and the same laser pulse consists in cutting off a portion (26) of the said tube.

6. Cutting method according to one of the preceding claims, in which an initial piercing is necessary in order to carry out this cutting, **characterized in that** the said planned laser pulse (36A, 36B) comprises an initial peak of power (38) to carry out the said initial piercing in the said part (4, 28).

7. Cutting method according to Claim 6, **characterized in that** the said initial peak of power (38) is followed by a pulse body (40) having a power profile which varies depending on the relative speed of the said relative movement.

8. Cutting method according to Claim 7, **characterized in that** the said power profile comprises a terminal portion with a negative gradient the value of which is determined depending on the deceleration in the stopping phase of the relative movement.

9. Cutting method according to Claim 7 or 8, **characterized in that** the said power profile is determined so as to provide a constant energy supply per unit of relative movement so that this supply is uniform along the cutting line or contour.

10. Cutting method according to one of the preceding claims, **characterized in that** the duration of the said laser pulses is situated substantially between 10 and 100 milliseconds (ms).

## Patentansprüche

1. Verfahren zum Schneiden eines Werkstückes (4;28) mit Hilfe eines Pulslasers (6) der einen aus Laserpulsen (36A,36B) gebildeten Laserstrahl (12) bereitstellt,
**dadurch gekennzeichnet,**
**dass** jeder Schnitt in das Werkstück vollständig durch einen einzigen Laserpuls während einer Relativbewegung zwischen dem Werkstück und dem Laserstrahl erfolgt, deren Geschwindigkeit 10 Meter pro Minute (m/min) oder mehr beträgt, wobei die Dauer des Laserpulses größer als eine Millisekunde (1ms) und in Abhängigkeit von der Relativbewegung ausreichend lang ist, so dass der Laserstrahl wenigstens die Länge dieses Schnittes während dieses einzigen Laserpulses durchläuft.

2. Verfahren zum Schneiden gemäß Patentanspruch 1,
**dadurch gekennzeichnet,**
**dass** es mit Hilfe einer optischen Scannervorrichtung oder einer rotierenden Optik durchgeführt wird, mit der es möglich ist, dem Laserstrahl während des Pulses eine schnelle Bewegung derart aufzuprägen, dass er auf dem Werkstück einer Spur entlang einer Linie oder einer vorbestimmten Schneidkontur folgt.

3. Verfahren zum Schneiden gemäß Patentanspruch 2,
**dadurch gekennzeichnet,**
**dass** es mit Hilfe eines Bearbeitungskopfes (9;50) durchgeführt wird, der keine horizontale Verschiebung erfährt, wobei der Bearbeitungskopf eine Düse (19;52) mit einer Austrittsöffnung für den Laserstrahl und ein Arbeitsgas aufweist, deren äußere Kontur annähernd der Kontur des Schnittes entspricht, um den Laserstrahl zu ermöglichen, aus dieser Düse beim Folgen der Spur entlang der Kontur des Schnittes auszutreten.

4. Verfahren zum Schneiden gemäß Patentanspruch 3,
**dadurch gekennzeichnet,**
**dass** der Bearbeitungskopf (50) eine Düse (52) enthält, die einen Spalt (54) aufweist, der eine Kontur festlegt, die der Kontur des vorgesehenen Schnittes entspricht.

5. Verfahren zum Schneiden gemäß Patentanspruch 1,
**dadurch gekennzeichnet,**
**dass** das Werkstück ein Rohr (28) ist, und dass der mit einem einzigen und denselben Laserpuls vorgesehene Schnitt aus einem Abschneiden eines Teils (26) des Rohres besteht.

6. Verfahren zum Schneiden gemäß einem der vorhergehenden Patentansprüche, bei dem zum Durchführen dieses Schnittes eine Startbohrung notwendig ist,
**dadurch gekennzeichnet,**
**dass** der vorgesehene Laserpuls B (36A, 36B) eine anfängliche Leistungsspitze (38) aufweist, um die Startbohrung in dem Werkstück (4,28) zu bewirken.

7. Verfahren zum Schneiden gemäß Patentanspruch 6,
**dadurch gekennzeichnet,**
**dass** an die anfängliche Leistungsspitze (38) ein Hauptpuls (40) folgt, dessen Leistungsprofil in Abhängigkeit von der Relativgeschwindigkeit der Relativbewegung variiert.

8. Verfahren zum Schneiden gemäß Patentanspruch 7,
**dadurch gekennzeichnet,**
**dass** das Leistungsprofil einen Endteil mit einer negativen Steigung aufweist, deren Wert von der Verzögerung in der Phase des Anhaltens dieser Relativbewegung abhängt.

9. Verfahren zum Schneiden gemäß Anspruch 7 oder 8,
**dadurch gekennzeichnet,**
**dass** das Leistungsprofil derart festgelegt ist, dass ein konstanter Energieeintrag pro relativer Verschiebungseinheit bereitgestellt wird, so dass dieser Eintrag entlang der Linie oder Schneidkontur gleichmäßig ist.

10. Verfahren zum Schneiden gemäß einem der vorhergehenden Patentansprüche, **dadurch gekennzeichnet, dass** die Dauer der besagten Laserpulse annähernd zwischen 10 und 100 Millisekunden (ms) beträgt.
